# EUROPÄISCHE PATENTSCHRIFT

(11) **EP 1 549 418 B1**
(45) Veröffentlichungstag und Bekanntmachung des Hinweises auf die Patenterteilung: **28.08.2013**
(21) Anmeldenummer: 03750524.5
(22) Anmeldetag: 11.09.2003
(51) Int. Cl.: B01D 53/86

(54) **VERFAHREN ZUR BEHANDLUNG EINES GASSTROMS SOWIE GASAUFBEREITUNGSSYSTEM**
METHOD FOR TREATING A FLOW OF GAS AND A GAS TREATMENT SYSTEM
PROCEDE DE TRAITEMENT D'UN FLUX GAZEUX ET SYSTEME DE TRAITEMENT DE GAZ

(30) Priorität: 02.10.2002 DE 10246252
(43) Veröffentlichungstag der Anmeldung: 06.07.2005
(73) Patentinhaber: AREVA GmbH, 91052 Erlangen (DE)
(72) Erfinder: HILL, Axel, 64589 Stockstadt (DE)
(74) Vertreter: Tergau & Walkenhorst
(86) Internationale Anmeldenummer: PCT/EP2003/010103
(87) Internationale Veröffentlichungsnummer: WO 2004/033076

(56) Entgegenhaltungen:
- EP-A- 0 350 656
- EP-A- 0 792 680
- DE-A- 2 552 138
- GB-A- 1 470 795

## Beschreibung

Die Erfindung betrifft ein Verfahren zur Behandlung eines Gasstroms, bei dem der Gasstrom zur Oxidation mitgeführter Verunreinigungen über ein katalytisches Adsorbermodul geführt wird. Sie bezieht sich weiter auf ein zur Durchführung des Verfahrens geeignetes Gasaufbereitungssystem.

Beim Betrieb einer kerntechnischen Anlage, insbesondere einer Kernkraftwerksanlage, ist die bestmögliche Vermeidung von Korrosionsschäden an wesentlichen Komponenten gerade im Primärbereich der jeweiligen Anlage, wie beispielsweise an Graphiteinbauten, Brennelementen oder sonstigen Komponenten im Reaktordruckbehälter, ein übliches Auslegungsziel. Gerade durch die weitgehende Vermeidung von Korrosionsschäden an diesen Komponenten soll nämlich die Standzeit oder Betriebsdauer verlängert und der möglicherweise erhebliche, mit der Behebung von Korrosionsschäden im Primärbereich der kerntechnischen Anlage verbundene Wartungs- und Reparaturaufwand gering gehalten werden. Aus diesem Grund kann bei einer kerntechnischen Anlage, insbesondere im Primärkreis eines Hochtemperaturreaktors, die Verwendung von Helium als Arbeits-oder Kühlmedium vorgesehen sein. Helium ist nämlich chemisch inert, so dass beispielsweise bei der Verwendung von Helium als Kühlgas für die genannten Komponenten mit Korrosionserscheinungen durch das Kühlgas an diesen Komponenten nicht gerechnet werden muss.

Allerdings können beim Betrieb der kerntechnischen Anlage, insbesondere beim Betrieb eines Hochtemperaturreaktors, Verunreinigungen, wie beispielsweise Kohlenmonoxid (CO), molekularer Wasserstoff (H₂), Methan (CH₄), molekularer Sauerstoff (O₂), Tritium, Wasser (H₂O), Kohlendioxid (CO₂) und/oder Staubpartikel in das als Primärkühlmittel oder Kühlgas verwendete Helium gelangen. Diese Verunreinigungen können ihrerseits zu unerwünschten Korrosionserscheinungen an den genannten Komponenten führen. Um diese Effekte gering und insbesondere unterhalb vorgegebener, als noch zulässig erachteter Grenzen zu halten, kann die Begrenzung der Konzentration derartiger Verunreinigungen im Kühlgasstrom durch die Verwendung einer Gasreinigungsanlage oder eines Gasaufbereitungssystems vorgesehen sein.

Beim Betrieb eines derartigen Gasreinigungssystems wird üblicherweise ein Teilstrom von etwa 50kg/h bis 300kg/h aus dem Helium-Kühlkreislauf entnommen und zunächst über einen Staubfilter geführt. Anschließend wird der zu reinigende Gasstrom auf eine Temperatur von etwa 250°C erhitzt und einem sogenannten katalytischen Adsorbermodul zugeführt. Das katalytische Adsorbermodul dient dabei einerseits zur katalytischen Unterstützung der vorgesehenen Umwandlungsprozesse und andererseits in der Art eines Puffers zur Zwischenspeicherung von bei diesen Prozessen benötigtem Sauerstoff. Im katalytischen Adsorbermodul, das üblicherweise als katalytisch aktive Adsorberkomponente eine Cu-CuO-Mi-schung umfasst, erfolgt bei der genannten, geeignet gewählten Betriebstempera-tur eine Oxidation des im zu reinigenden Gasstrom als Verunreinigung mitgeführten Wasserstoffs und Kohlenmonoxids zu Wasser (H₂O) und Kohlendioxid (CO₂). Der dafür erforderliche Sauerstoff wird dem CuO-Anteil des katalytisch aktiven Adsorbermaterials entnommen, so dass in Folge der Umsetzung eine kontinuierliche Anreicherung des Cu-Anteils auf Kosten des CuO-Anteils erfolgt. Anschließend wird der nunmehr von molekularem Wasserstoff und von Kohlenmonoxid befreite zu reinigende Gasstrom üblicherweise gekühlt, wobei in einem Molekularsieb die mitgeführten Wasser- und Kohlendioxidbestandteile abgeschieden werden. Anschließend erfolgt üblicherweise eine sogenannte Tieftemperatur-Adsorbtion, bei der vorwiegend Methan, molekularer Sauerstoff und Spaltprodukte durch Adsorbtion aus dem zu reinigenden Gasstrom entfernt werden. Nach erfolgter Entfernung der Verunreinigungen wird der nunmehr gereinigte Gasstrom dem Helium-Kühlkreislauf wieder zugeführt.

Ein derartiges Gasaufbereitungssystem ist jedoch insbesondere im Hinblick auf die Anzahl und die Installation der erforderlichen Komponenten vergleichsweise aufwändig. Zudem bedingt die Verwendung des katalytischen Adsorbermoduls in der genannten Art, dass nach erfolgtem "Verbrauch" der CuO-Anteile im katalytischen Adsorbermodul, d.h. nach nahezu vollständiger Umsetzung des CuO-Anteils in Cu, eine Regeneration durch Beaufschlagung mit Sauerstoff erforderlich ist, so dass das jeweilige Modul in dieser Zeit nicht für die Reinigung des Gasstroms zur Verfügung steht. Daher sind bei einem derartigen Gasaufbereitungssystem üblicherweise zwei oder noch mehr gleichartige Teilstränge parallel geschaltet, was den apparativen Aufwand noch mehr vergrößert. Ein derartiges Gasaufbereitungssystem ist in GB 1 470 795 offenbart.

Der Erfindung liegt daher die Aufgabe zugrunde, ein Verfahren zur Behandlung eines Gasstroms der oben genannten Art anzugeben, mit dem mit vergleichsweise einfach gehaltenem apparativen Aufwand eine zuverlässige Reinigung des Gasstroms ermöglicht ist. Des Weiteren soll ein zur Durchführung des Verfahrens besonders geeignetes Gasaufbereitungssystem angegeben werden.

Bezüglich des Verfahrens wird diese Aufgabe erfindungsgemäß gelöst, in dem der Gasstrom in einer ersten Reinigungsstufe zur Oxidation mitgeführter Verunreinigungen über ein erstes katalytisches Adsorbermodul geführt und dem Gasstrom molekularer oder atomarer Sauerstoff zugemischt wird, wobei der mit dem zugemischten Sauerstoff versetzte Gasstrom in einer zweiten Reinigungsstufe über einen Oxidationskatalysator geführt wird, und wobei der aus dem Oxidationkatalysator abströmende Gasstrom in einer dritten Reinigungsstufe zur Reduktion von überschüssigem Sauerstoff über ein zweites katalytisches Adsorbermodul geführt wird.

Die Erfindung geht dabei von der Überlegung aus, dass der apparative und auch betriebliche Aufwand für eine zuverlässige Reinigung des Gasstroms unter Verwendung von katalytischen Adsorbermodulen besonders gering gehalten werden kann, indem insbesondere die Anzahl der insgesamt erforderlichen Komponenten gering gehalten wird. Das Konzept zur Gasaufbereitung sollte daher auf eine weitgehende Vermeidung von Redundanzen bei den verwendeten Komponenten ausgerichtet sein. Um dementsprechend die Anzahl der parallel geschalteten, gleichwirkenden Teilstränge besonders gering halten zu können oder das Gasaufbereitungssystem hinsichtlich der Gasstromführung möglichst einsträngig ausführen zu können, sollte das Konzept zur Behandlung des Gasstroms auf eine kontinuierliche Betriebsmöglichkeit des jeweiligen katalytischen Adsorbermoduls hin ausgerichtet sein. Dies ist erreichbar durch die Verwendung zweier gasstromseitig in Reihe geschalteter katalytischer Adsorbermodule, von denen eines bei der Behandlung des Gasstroms in herkömmlicher Weise zur Oxidation der mitgeführten Verunreinigungen verwendet und dabei reduziert wird, wobei das jeweils andere katalytische Adsorbermodul zur Reduktion von Sauerstoff verwendet und dabei oxidiert wird.

Bei einer derartigen Ausgestaltung ist für den Fall, dass eines der Adsorbermodule vollständig "verbraucht" ist, also dass der jeweilige Bestandteil vollständig oxidiert bzw. reduziert ist, durch eine einfache Umkehrung der gasstromseitigen Verschaltung der katalytischen Adsorbermodule ein Weiterbetrieb des Gasaufbereitungssystems ermöglicht. Um die kombinierte Verwendung der katalytischen Adsorbermodule zur Oxidation einerseits und zur Reduktion andererseits zu ermöglichen, wird der Gasstrom zwischen den katalytischen Adsorbermodulen einer ohnehin erforderlichen weiteren Reinigungsstufe in einem Oxidationskatalysator unterzogen. Der hierzu erforderliche zusätzliche Sauerstoff wird dem Gasstrom an geeigneter Stelle vor dem Oxidationskatalysator zugemischt, wobei überschüssiger Sauerstoff im gasstromseitig nachfolgenden zweiten katalytischen Adsorbermodul zu dessen Oxidation und somit zu dessen Regeneration zur Verfügung steht.

Zweckmäßigerweise wird sowohl im ersten als auch im zweiten katalytischen Adsorbermodul jeweils ein Cu-CuO-Gemisch als katalytisches Adsorbermaterial verwendet. Im gasstromseitig gesehen ersten katalytischen Adsorbermodul, das jeweils zur Oxidation von im Gasstrom mitgeführten Verunreinigungen vorgesehen ist, erfolgt unter Freisetzung des zur Oxidation benötigten Sauerstoffs eine Umsetzung des CuO-Anteils in den Cu-Anteil des Adsorbermaterials. Im Gegensatz dazu erfolgt im gasstromseitig gesehen zweiten katalytischen Adsorbermodul, in dem der im Gasstrom nunmehr vorhandene überschüssige Sauerstoff durch Adsorbtion entfernt wird, eine Umwandlung des CU-Anteils in den CuO-Anteil des katalytischen Adsorbermaterials. Bei zunehmender Betriebsdauer bei der Behandlung des Gasstroms erfolgt somit im gasstromseitig gesehen ersten katalytischen Adsorbermodul eine zunehmende Anreicherung des Cu-Anteils und eine zunehmende Abreicherung des CuO-Anteils des dort vorgehaltenen katalytischen Adsorbermaterials, wohingegen im gasstromseitig gesehen zweiten katalytischen Adsorbermodul umgekehrt eine zunehmende Abreicherung des Cu-Anteils und eine zunehmende Anreicherung des CuO-Anteils des dort vorgehaltenen katalytischen Adsorbermaterials erfolgt. Sollte ein "Verbrauch" eines der katalytischen Adsorbermodule, also eine vollständige Umsetzung in Cu bzw. CuO des jeweils vorgehaltenen katalytischen Adsorbermaterials festgestellt werden, so kann eine Umverschaltung der katalytischen Adsorbermodule hinsichtlich der Gasstromführung vorgenommen werden, so dass nunmehr das mit CuO angereicherte katalytische Adsorbermodul als erstes katalytisches Adsorbermodul zur Oxidation von im Gasstrom mitgeführten Verunreinigungen und das mit Cu angereicherte katalytische Adsorbermodul als zweites katalytisches Adsorbermodul zur Reduktion von überschüssigem Sauerstoff verwendet wird.

Die Zumischung von Sauerstoff erfolgt dabei zweckmäßigerweise derart, dass im gasstromseitig gesehen zweiten katalytischen Adsorbermodul jederzeit ausreichend überschüssiger Sauerstoff zur Oxidation von dort vorgehaltenem katalytischem Adsorbermaterial zur Verfügung steht. Dazu wird vorteilhafterweise vor dem Eintritt des Gasstroms in das erste katalytische Adsorbermodul ein Kennwert für den Anteil mitgeführter Verunreinigungen im Gasstrom ermittelt, anhand dessen die Zumisch-Rate für den Sauerstoff in den Gasstrom eingestellt wird. Um dabei die gezielte Nutzung sowohl des ersten katalytischen Adsorbermoduls als auch des zweiten katalytischen Adsorbermoduls zu gewährleisten, wird die Zumischrate für den Sauerstoff vorteilhafterweise derart eingestellt, dass bezogen auf die insgesamt im Gasstrom mitgeführten Verunreinigungen Sauerstoffmangel herrscht und somit zumindest Teile der Oxidation der Verunreinigungen im ersten katalytischen Adsorbermodul erfolgen, und dass bezogen auf die im Oxidationskatalysator vorgesehene Umsetzung weiterer Verunreinigungen Sauerstoffüber-schuss vorliegt, so dass im zweiten katalytischen Adsorbermodul überschüssiger Sauerstoff zur Regenration des dort vorgehaltenen katalytischen Adsorbermaterials zur Verfügung steht.

Der Oxidationskatalysator wird bevorzugt zur Behandlung von Verunreinigungen wie Methan oder Tritium eingesetzt. Um dabei eine besonders hohe Umsetzungsrate und somit eine besonders sorgfältige Reinigung des Gasstroms von derartigen Verunreinigungen zu gewährleisten, wird für den Gasstrom bei seinem Eintritt in den Oxidationskatalysator vorteilhafterweise eine Temperatur von etwa 400°C bis 450°C eingestellt, so dass bei in ausreichendem Maße bereitgestellten Sauerstoff eine besonders weitgehende Umsetzung der genannten Verunreinigungen in Wasser und Kohlendioxid erfolgen kann. Eine besonders ressourcenschonende und somit wirtschaftliche Betriebsweise ist dabei erreichbar, indem der Gasstrom in besonders vorteilhafter Ausgestaltung vor seinem Eintritt in den Oxidationskatalysator durch rekuperativen Wärmetausch mit dem vom Oxidationskatalysator abströmenden Gasstrom vorgewärmt wird. Dabei wird die im vom Oxidationskatalysator abströmenden Gasstrom noch mitgeführte Wärme zumindest teilweise zur Vorwärmung des in den Oxidationskatalysator eintretenden Gasstroms genutzt, so dass zur Einstellung der endgültig gewünschten Eintrittstemperatur im Gasstrom allenfalls noch eine Zusatzbeheizung, wie beispielsweise eine elektrische Zusatzbeheizung, erforderlich ist.

Insbesondere bei der Verwendung eines Cu-CuO-Gemisches als katalytisch aktives Adsorbermaterial im ersten katalytischen Adsorbermodul wird dieses vorzugsweise zur Oxidation von im Gasstrom mitgeführtem Wasserstoff und Kohlenmonoxid verwendet. Um bei dessen Oxidation zu Wasser bzw. Kohlendioxid unter gezielter Ausnutzung der katalytischen Eigenschaften von Cu eine besonders günstige Reaktionsrate und einen besonders günstigen Reaktionsgrad sicherzustellen, wird für den Gasstrom bei seinem Eintritt in das erste katalytische Adsorbermodul vorteilhafterweise eine Temperatur von etwa 250°C eingestellt. Auch hier ist eine besonders ressourcenschonende und somit wirtschaftliche Betriebsweise erreichbar, indem in weiterer vorteilhafter Ausgestaltung der Gasstrom vor seinem Eintritt in das erste katalytische Adsorbermodul durch rekuperativen Wärmetausch mit dem vorn zweiten katalytischen Adsorbermodul abströmenden Gasstrom vorgewärmt wird. Somit wird bei dieser vorteilhaften Ausgestaltung der im vom zweiten katalytischen Adsorbermodul und somit vom Gasreinigungssystem insgesamt abströmenden Gasstrom noch mitgeführte Wärmeinhalt zur teilweisen Vorwärmung des dem Gasreinigungssystem zuströmenden Gasstroms genutzt.

In besonders vorteilhafter Weiterbildung wird das Verfahren beim Betreiben einer Kernkraftwerksanlage zur Behandlung eines Teilstroms eines Helium-Kühlgasstroms eingesetzt. Dabei wird der Teilstrom des Helium-Kühlgasstroms vorzugsweise von mitgeführten Verunreinigungen wie Kohlenmonoxid, molekularem Wasserstoff, Methan, molekularem Sauerstoff, Tritium, Wasser und/oder Kohlendioxid gereinigt. Die Umsetzung von molekularem Wasserstoff und Kohlenmonoxid in Wasser bzw. Kohlendioxid erfolgt dabei vorzugsweise im ersten katalytischen Adsorberelement. Unter rechtzeitiger Zumischung einer ausreichenden Menge von Sauerstoff erfolgt sodann im Oxidationskatalysator die Umsetzung von Methan und/oder Tritium ebenfalls zu Kohlendioxid und/oder Wasser. Der dann noch im Gasstrom verbliebene überschüssige Sauerstoff wird anschließend zur Anreicherung des zweiten katalytischen Adsorbermoduls verwendet und dabei wieder aus dem Gasstrom entfernt. Anschließend kann eine Abscheidung der noch im Gasstrom befindlichen Wasser- und Kohlendioxidbestandteile auf her-kömmliche Weise erfolgen, die ggf. noch um eine Abscheidung von Staubteilchen oder Edelgasaktivitäten ergänzt sein kann. Anschließend wird der somit gereinigte Helium-Gasteilstrom in den eigentlichen Helium-Kühlkreislauf zurückgeführt.

Gerade bei dieser Anwendung kann das Verfahren in besonders günstiger Weise genutzt werden, um mit vergleichsweise wenigen Komponenten eine kontinuierliche Behandlung eines Gasstroms zu ermöglichen. Da nämlich bei der Behandlung des Gasstroms das in Strömungsrichtung des Gasstroms gesehen erste katalytische Adsorbermodul reduziert, das Strömungsrichtung des Gasstroms gesehen zweite katalytische Adsorbermodul aber oxidiert wird, erfolgt im ersten katalytischen Adsorbermodul eine kontinuierliche Umsetzung von CuO in Cu und im zweiten katalytischen Adsorbermodul eine kontinuierliche Umsetzung von Cu in CuO.

Sobald festgestellt wird, dass eines der katalytischen Adsorbermodule vollständig "verbraucht" ist, dass also der Cu bzw. der CuO-Anteil vollständig in den jeweils anderen Gemischanteil umgesetzt ist, so kann eine Umschaltung oder Umpolung der Verschaltungsreihenfolge der katalytischen Adsorbermodule im Strömungspfad des Gasstroms erfolgen. Nach erfolgter Umschaltung wird somit das bislang zur Entfernung von Sauerstoff aus dem Gasstrom genutzte zweite katalytische Adsorbermodul als das neu verschaltete erste katalytische Adsorbermodul weitergenutzt, wobei der in diesem Adsorbermodul eingebettete Sauerstoff nunmehr wieder bei der Behandlung der entsprechenden Verunreinigungen im Gasstrom an diesen abgegeben wird. Das bisher zur Oxidation von Wasserstoff oder Kohlenmonoxid im Gasstrom verwendete erste katalytische Adsorbermodul wird nach der Umschaltung als neu verschaltetes zweites katalytisches Adsorbermodul genutzt, wobei durch die Aufnahme des überschüssigen Sauerstoffs aus dem Gasstrom der CuO-Anteil des katalytisch aktiven Adsorbermaterials regeneriert wird.

Für eine rechtzeitige und besonders bedarfsgerechte Einleitung der Umschaltung wird vorteilhafterweise im aus dem zweiten katalytischen Adsorbermodul abströmenden Gasstrom ein Kennwert für den Anteil von möglicherweise mitgeführtem Sauerstoff ermittelt. Nach dem Überschreiten eines vorgegebenen Grenzwerts für diesen Kennwert wird auf eine vollständige Umsetzung des Cu-Anteils im zweiten katalytischen Adsorbermodul geschlossen, so dass die Positionen des ersten und des zweiten katalytischen Adsorberelements im Strömungspfad des Gasstroms ausgetauscht werden.

Bezüglich des Gasaufbereitungssystems wird die angegebene Aufgabe gelöst mit mindestens zwei im Hinblick auf einen Gasstrom in Reihe geschalteten katalytischen Adsorbermodulen, zwischen die gasstromseitig ein Oxidationskatalysator geschaltet ist.

Um die vorgesehene Umsetzung der jeweiligen Verunreinigungen im Oxidationskatalysator in besonderem Maße zu begünstigen, ist diesem vorteilhafterweise gasstromseitig eine Zuspeiseeinheit für molekularen oder atomaren Sauerstoff (prüfen, s.o.) vorgeschaltet. In besonders vorteilhafter Weiterbildung ist dabei vorgesehen, die Zuspeisung oder Zumischung des Sauerstoffs zum Gasstrom bedarfsgerecht und somit in Abhängigkeit von den im Gasstrom mitgeführten Verunreinigungen vorzunehmen. Um dies zu ermöglichen, ist ein der Zuspeiseeinheit zugeordneter Stellwertgeber vorteilhafterweise eingangsseitig mit einem dem gasstromseitig gesehen ersten katalytischen Adsorbermodul vorgeschalteten Sensor für den Anteil mitgeführter Verunreinigungen im Gasstrom verbunden.

Das Gasaufbereitungssstem ist zweckmäßigerweise für einen Einsatz bei der Behandlung eines Teilstroms aus einem Helium-Primärkühlkreislauf einer kerntechnischen Anlage ausgerüstet. Gerade für die Entfernung typischer Verunreinigungen wie molekularem Wasserstoff oder Kohlenmonoxid aus einem Helium-Gasstrom sind die katalytischen Eigenschaften einerseits und die Eignung zur Sauerstoffspeicherung andererseits eines Cu-CuO-Gemisches besonders günstig. Vorteilhafterweise umfassen daher die katalytischen Adsorbermodule des Gasaufbereitungssystems jeweils ein Cu-CuO-Gemisch als katalytisches Adsorbermaterial.

Um die Einstellung besonders günstiger und bedarfsgerechter Betriebsparameter, wie insbesondere einer geeigneten Betriebstemperatur im Oxidationskatalysator, zu ermöglichen, ist diesem gasstromseitig zweckmäßigerweise ein Zwischenbeheizungssystem vorgeschaltet. Dieses ist besonders ressourcenschonend und somit wirtschaftlich betreibbar, indem es zur Wärmerückgewinnung vom aus dem Oxidationskatalysator abströmenden Gasstrom ausgelegt ist. Dazu umfasst das Zwischenbeheizungsssystem vorteilhafterweise einen Rekuperativ-Wärmetauscher, der primärseitig in eine dem Oxidationskatalysator zugeordnete Abströmleitung für den Gasstrom und sekundärseitig in eine dem Oxidationskatalysator zugeordnete Zuströmleitung für den Gasstrom geschaltet ist.

Um in flexibler Betriebsweise eine bedarfsgerechte Einstellung einer gewünschten Eintrittstemperatur des Gasstroms in den Oxidationskatalysator zu ermöglichen, ist der Rekuperativ-Wärmetauscher in weiterer vorteilhafter Ausgestaltung durch ein Beheizelement, zweckmäßigerweise einen elektrischen Heizer, ergänzt. In analoger Weise ist das Gasaufbereitungssystem auch für die Einstellung einer besonders günstigen Betriebstemperatur im gasstromseitig gesehen ersten katalytischen Adsorbermodul ausgelegt. Dazu ist diesem vorteilhafterweise ein Beheizungssystem vorgeschaltet. Auch dieses Beheizungssystem ist besonders ressourcenschonend und somit wirtschaftlich betreibbar, indem es vorteilhafterweise für eine Wärmerückgewinnung aus dem aus dem Gasaufbereitungssystem abströmenden Gasstrom ausgelegt ist. Dazu umfasst das Beheizungssystem in weiterer vorteilhafter Ausgestaltung einen Rekuperativ-Wärmetauscher, der primärseitig in eine dem zweiten katalytischen Adsorbermodul zugeordnete Abströmleitung für den Gasstrom und sekundärseitig in eine dem ersten katalytischen Adsorbermodul zugeordnete Zuströmleitung für den Gasstrom geschaltet ist.

In besonders vorteilhafter Weiterbildung ist das Gasaufbereitungsystem für eine kontinuierliche Betriebsführung ausgelegt, bei der während des Betriebs das jeweils gasstromseitig gesehen erste katalytische Adsorbermodul reduziert und das jeweils gasstromseitig gesehen zweite katalytische Adsorbermodul oxidiert wird. Um einen kontinuierlichen Betrieb auch nach vollständiger Umsetzung der jeweils aktiven Materialien bei diesen Reaktionen zu ermöglichen, ist das Gasaufbereitungssystem vorteilhafterweise für eine bedarfsweise Umschaltung der katalytischen Adsorbermodule hinsichtlich ihrer Verschaltung im Strömungsweg des Gasstroms ausgelegt. Dazu ist den katalytischen Adsorbermodulen zweckmäßigerweise ein gemeinsames Umschaltsystem für die Strömungsführung des Gasstroms zugeordnet.

Eine besonders kompakte Bauweise des Gasaufbereitungssystems ist erreichbar, indem in besonders vorteilhafter Weiterbildung dessen Komponenten, also insbesondere die katalytischen Adsorbermodule und der Oxidationskatalysator, ggf. aber auch die Beheizungssysteme mit ihren Wärmetauschern und/oder die Zuspeiseeinheit für Sauerstoff in der Art einer integrierten Ausführung in einem gemeinsamen Druckbehälter angeordnet sind. Dabei können sämtliche genannten Komponenten von einer gemeinsamen druckführenden Umschließung umgeben sein, die die Druckhaltung für das Gesamtsystem gewährleistet.

Die in dieser Hochdruckumschließung angeordneten Einzelkomponenten können infolge der Entkopplung der Druckhaltung von der strukturellen Ausführung der Einzelkomponenten vergleichsweise dünnwandig und hinsichtlich der mechanischen Belastbarkeit gering dimensioniert ausgeführt sein. Dies ermöglicht einer-seits eine materialsparende und somit wirtschaftliche Bauweise wobei andererseits aufgrund der dann vergleichsweise gering gehaltenen thermisch beaufschlagten Massen vergleichsweise schnelle Aufheiz- und Abkühlvorgänge einzelner Komponenten sowie eine schnelle und flexible Anpassung der jeweils benötigten Reaktionstemperaturen an den zu reinigenden Gasstrom ermöglicht sind. Insbesondere ermöglicht eine dünnwandige Ausführung der aktiven Komponenten eine schnelle und zuverlässige Einstellung einer vergleichsweise hohen Temperatur in den jeweiligen Reaktionszonen, so dass auch kurzfristig ein vergleichsweise hoher Umsetzungsgrad bei den einzelnen Reaktionen erreichbar ist.

Gerade auch die Integration des Rekuperativ-Wärmetauschers in die gemeinsame druckführende Umschließung ermöglicht darüber hinaus eine wirkungsvolle Abkühlung des austretenden Gasstroms vor nachfolgenden Reinigungskomponenten, wie beispielsweise Molekularsieben, wobei gleichzeitig eine wirkungsvolle Aufheizung des eintretenden Gasstroms gewährleistet ist. Ebenso ermöglicht der vor den Oxidationskatalysator geschalteten Rekuperativ-Wärmetauscher eine wirkungsvolle Abkühlung des aus dem Oxidationskatalysator austretenden Gasstroms, so dass eine Überhitzung des diesem nachgeschalteten zweiten katalytischen Adsorbermoduls zuverlässig vermieden ist.

Vorteilhafterweise ist das Gasaufbereitungssystem an den Helium-Kühlgaskreislauf einer kerntechnischen Anlage angeschlossen.

Die mit der Erfindung erzielten Vorteile bestehen insbesondere darin, dass durch die serielle Verschaltung eines Oxidationskatalysators zwischen ein erstes und ein zweites katalytischen Adsorbermodul eine gezielte Behandlung verschiedenartiger Verunreinigungen im jeweiligen Gasstrom ermöglicht ist, wobei bei der Behandlung des Gasstroms zwar das gasstromseitig gesehen erste katalytische Adsorbermodul zu Oxidationszwecken verwendet und damit dessen sauerstofftragende Komponente zunehmend verbraucht wird, wobei aber gleichzeitig das gasstromseitig gesehen zweite katalytische Adsorbermodul in umgekehrter Betriebsweise zur Entfernung von überschüssigem Sauerstoff aus dem Gasstrom verwendet werden kann, wobei sich dessen sauerstofftragender Anteil regeneriert.

Somit sind der gewöhnliche Betrieb eines katalytischen Adsorbermoduls und die Regeneration eines katalytischen Adsorbermoduls gleichzeitig und somit in einem Arbeitsgang vollzogen. Auch nach eintretendem "Verbrauch" der sauerstofftragenden Komponente in dem gasstromseitig gesehenen ersten katalytischen Adsorbermodul kann das Gasaufbereitungssystem ohne nennenswerte Betriebspause weiter genutzt werden, nachdem durch einfache Umschaltung der Positionen der katalytischen Adsorbermodule im Strömungspfad des Gasstroms das bisher regenerierte Adsorbermodul als nunmehr gasstromseitig erstes katalytische Adsorbermodul zur Oxidation von Verunreinigungen im Gasstrom verwendet und dabei gleichzeitig das "verbrauchte" katalytische Adsorbermodul nunmehr regeneriert wird. Durch den damit ermöglichten kontinuierlichen Betrieb des Gasaufbereitungssystems, bei dem keine Betriebspausen zur gezielten Regeneration einzelner Adsorbermodule mehr erforderlich sind, können Redundanzen oder mehrsträngige Ausführungen derartiger System entfallen oder zumindest reduziert werden. Gerade durch die Integration der aktiven Komponenten in eine gemeinsame druckführende Umhüllung ist zudem eine besonders kompakte und somit platzsparende Bauweise erreicht, bei der zudem aufgrund der Entkopplung der Druckhaltung von den thermisch belasteten Strukturteilen eine besonders einfache und schnelle Verfahrensführung ermöglicht ist.

Ein Ausführungsbeispiel der Erfindung wird anhand einer Zeichnung näher erläutert. Darin zeigen:
- Figur 1: schematisch den Schaltungsplan eines Gasaufbereitungssystems,
- Figur 2: das Gasaufbereitungssystem nach Figur 1 im Längsschnitt und
- Figur 3: das Gasaufbereitungssystem gemäß Figuren 1 und 2 im Querschnitt.

Gleiche Teile sind in allen Figuren mit denselben Bezugszeichen versehen.

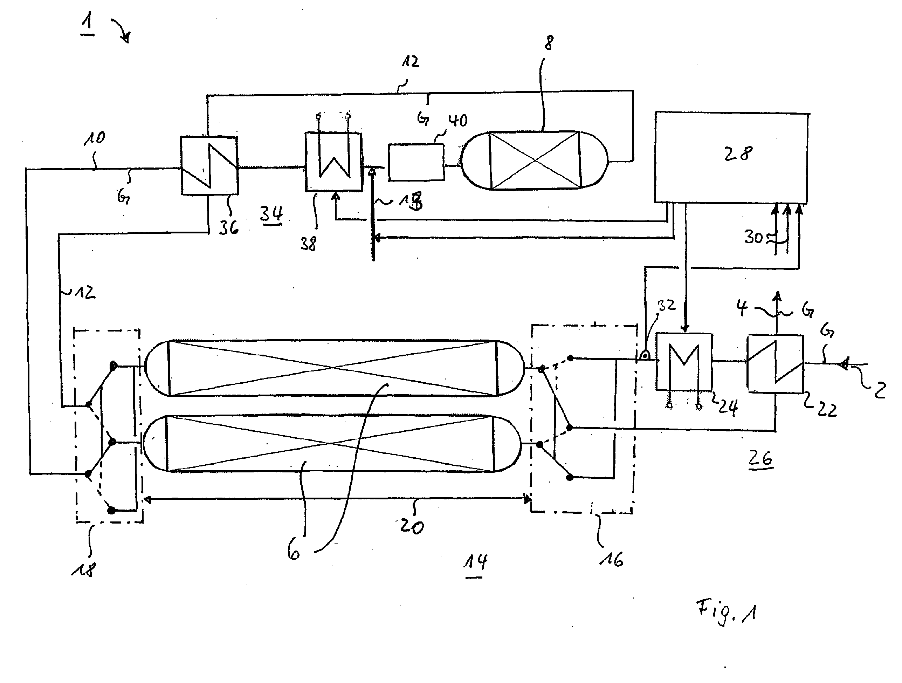

Das Gasaufbereitungssystem 1, dessen Verschaltungsplan in Figur 1 dargestellt ist, ist zur Behandlung eines Gasstroms G, nämlich eines Teilstroms aus dem Helium-Primärkühlkreislauf einer nicht näher dargestellten kerntechnischen Anlage, vorgesehen. Dazu ist das Gasuafbereitungssystem 1 über eine Gaszuführungsleitung 2 und über eine Gasableitung 4 an den nicht näher dargestellten Helium-Primärkühlkreislauf der kerntechnischen Anlage angeschlossen.

Das Gasaufbereitungssystem 1 ist zur gezielten Entfernung von im Helium des Gasstroms G möglicherweise mitgeführten Verunreinigungen, wie beispielsweise Wasserstoff, Kohlenmonoxid, Methan oder Tritium, vorgesehen. Die Entfernung von Wasserstoff und Kohlenmonoxid soll dabei über eine Oxidation zu Wasser bzw. Kohlendioxid erfolgen, die jeweils in einem in die Gasableitung 4 geschalteten, nicht näher dargestellten Molekularsieb abgeschieden und zurückgehalten werden.

Zur Umsetzung von Wasserstoff und Kohlenmonoxid in Wasser bzw. Kohlendioxid umfasst das Gasreinigungssystem eine Anzahl von katalytischen Adsorbermodulen 6. In jedem katalytischen Adsorbermodul 6 ist jeweils als katalytisches Adsorbermaterial ein Cu-CuO-Gemisch vorgehalten. Bei der Verwendung dieses katalytischen Adsorbermaterials wird einerseits dessen Eigenschaft als Katalysator genutzt, die die gewünschte Umsetzung von Wasserstoff in Wasser bzw. von Kohlenmonoxid in Kohlendioxid unterstützt. Andererseits wird bei diesem katalytischen Adsorbermaterial aber auch die Fähigkeit zur Zwischenspeicherung von Sauerstoff genutzt, der bedarfsweise, also bei der gewünschten Umsetzungsreaktion, zur Oxidation von Wasserstoff oder Kohlenmonoxid in den Gasstrom freigesetzt wird. Bei einem in diesem Betriebsmodus, also zur Oxidation von Wasserstoff oder Kohlenmonoxid betriebenen katalytischen Adsorbermodul 6 erfolgt somit ein Abbau des CuO-Anteils im katalytischen Adsorbermaterial unter Anreicherung von dessen Cu-Anteil.

Zur gezielten Umsetzung von Methan oder Tritium in Kohlendioxid und/oder Wasser weist das Gasaufbereitungssystem 1 zudem einen Oxidationskatalysator 8 auf. Der Oxidationskatalysator 8, der als katalytisch aktive Komponente eine geeignet strukturierte Edelmetallwabe, vorzugsweise aus Platin und/oder Palladium, umfasst, ist eingangsseitig über eine Zuströmleitung 10 mit dem Gasstrom G beaufschlagt. Ausgangsseitig ist der Oxidationskatalysator 8 an eine Abströmleitung 12 für den Gasstrom G angeschlossen. Um die gewünschte Umsetzungsreaktion zur Entfernung der Verunreinigungen Methan oder Tritium im Oxidationskatalysator 8 zu ermöglichen, ist diesem in der Zuströmleitung 10 gasstromseitig eine Zuspeiseeinheit 13 für Sauerstoff vorgeschaltet. Im Ausführungsbeispiel ist dabei die Zuspeisung molekularen Sauerstoffs vorgesehen; es könnten aber auch andere geeignet gewählte Sauerstoffträger vorgesehen sein

Das Gasaufbereitungssystem ist zur Vermeidung vielfältiger Redundanzen und zur Geringhaltung der Anzahl der insgesamt erforderlichen Komponenten für eine kontinuierliche Betreibbarkeit ausgestaltet. Die kontinuierliche Betreibbarkeit ist dabei selbst für den Fall vorgesehen, dass der CuO-Anteil im zur Oxidation der genannten Verunreinigungen des Gasstroms G verwendeten katalytischen Adsorbermodul 6 vollständig oder nahezu vollständig aufgebraucht ist. Um auch in diesem Fall einen Weiterbetrieb des Gasaufbereitungssystems 1 ohne zwischenzeitlich erforderliche Regenerationsphase für das katalytische Adsorbermodul 6 zu ermöglichen, umfasst das Gasaufbereitungssystem 1 eine Mehrzahl - im Ausführungsbeispiel zwei - gleichartig ausgebildete katalytische Adsorbermodule 6. Die katalytischen Adsorbermodule 6 sind dabei gasstromseitig über die Zuströmleitung 10 und die Abströmleitung 12 in Reihe geschaltete, wobei der Oxidationskatalysator 8 gasstromseitig zwischen die katalytischen Adsorbermodule 6 geschaltet ist. Zur gasstromseitigen Verschaltung der katalytischen Adsorbermodule 6 und des Oxidationskatalystors 8 miteinander ist den katalytischen Adsorbermodulen 6 ein gemeinsames Umschaltsystem 14 zugeordnet, das eine erste, endseitig an den katalytischen Adsorbermodulen 6 angeordnete Umschalteinheit 16 und eine zweite, am jeweils anderen Ende der katalytischen Adsorbermodule 6 angeordnete Umschalteinheit 18 umfasst. Die Umschalteinheiten 16, 18 stehen dabei, wie durch den Doppelpfeil 20 angedeutet, in Wirkverbindung, so dass ein geeignetes synchrones Umschalten des Strömungspfades durch die katalytischen Adsorbermodule 6 ermöglicht ist.

Das Umschaltsystem 14 ist dabei derart ausgestaltet, dass hinsichtlich der gasstromseitigen Position oder Abfolge bei der Hintereinanderschaltung des ersten katalytischen Adsorbermoduls 6, des Oxidationskatalystors 8 und des zweiten katalytischen Adsorbermoduls 6 die Positionierung der beiden katalytischen Adsorbermodule 6 gegeneinander ausgetauscht werden kann. Wie in der Darstellung nach Figur 1 für eine erste Schaltstellung gezeigt, ist das in Figur 1 als unteres Modul dargestellte katalytische Adsorbermodul 6 eingangsseitig mit der Gaszuführleitung 2 und ausgangsseitig über die Zuströmleitung 10 mit dem Oxidationskatalysator 8 verbunden. Im Gegensatz dazu ist in dieser Schaltstellung das in der Figur oben dargestellte katalytische Adsorbermodul 6 eingangsseitig über die Abströmleitung 12 mit dem Oxidationskatalysator 8 und ausgangsseitig mit der Abströmleitung 4 verbunden. In der in Figur 1 gezeigten Schaltstellung liegt somit eine gasstromseitige Hintereinanderschaltung des unteren katalytischen Adsorbermoduls 6 als erstes katalytisches Adsorbermodul 6, des Oxidationskatalysators 8 und des oberen katalytischen Adsorbermodul 6 als zweites katalytisches Adsorbermodul 6 vor.

Nach einer Umschaltung dieser Reihenschaltung durch das Umschaltsystem 14 kann jedoch auch eine alternative Schaltstellung eingenommen werden, die in Figur 1 durch die strichliert gezeichneten Schaltelemente in den Umschalteinheiten 16,18 repräsentiert ist. In dieser zweiten Schaltstellung ist nunmehr das oben dargestellte katalytische Adsorbermodul 6 als gasstromseitig gesehen erstes katalytisches Adsorbermodul 6 über die Zuströmleitung 10 dem Oxidationskatalysator 8 vorgeschaltet, wohingegen in dieser zweiten Schaltstellung das untere katalytische Adsorbermodul 6 als zweites katalytisches Adsorbermodul 6 dem Oxidationskatalysator 8 über die Abströmleitung 12 nachgeschaltet ist.

Dasjenige katalytische Adsorbermodul 6, das in der jeweiligen Schaltstellung als erstes katalytisches Adsorbermodul 6 dem Oxidationskatalysator 8 gasstromseitig vorgeschaltet ist, dient zur Oxidation von im Gasstrom G mitgeführtem Wasserstoff oder Kohlenmonoxid. Dabei gibt der CuO-Anteil des jeweiligen katalytischen Adsorbermoduls 6 Sauerstoff in den Gasstrom G ab, um somit die Oxidation zu ermöglichen. Um dabei eine für diese Reaktion besonders günstige Reaktionstemperatur im Gasstrom G mit vergleichsweise geringem betrieblichen Aufwand und ressourcenschonend zu ermöglichen, ist in die Zuführleitung 2 ein rekuperativer Wärmetauscher 22 geschaltet, der primär- oder beheizungsseitig in die Abgasleitung 4 geschaltet ist. Durch den Rekuperativ-Wärmetauscher 22 ist somit ein Wärmetransfer vom aus dem Gasaufbereitungssystem 1 abströmenden Gasstrom G auf den in das Gasaufbereitungssystem 1 einströmenden Gasstrom G möglich, so dass eine besonders ressourcenschonende Vorwärmung des einströmenden Gasstroms G gewährleistet ist. Um die Einstellung besonders günstiger Betriebsparameter, insbesondere einer für die gewünschte Umsetzungsreaktion besonders günstigen Betriebstemperatur von etwa 250°C zu ermöglichen, ist dem Rekuperativ-Wärmetauscher 22 ergänzend ein elektrisch betriebener Heizer 24 zugeordnet, der gemeinsam mit dem Rekuperativ-Wärmetauscher 22 ein Beheizungssystem 26 für das Gasaufbereitungssystem 1 bildet. Der elektrische betreibbare Heizer 24 ist dabei hinsichtlich seiner Heizleistung über eine zentrale Steuereinheit 28 angesteuert, die anhand einer Vielzahl von an geeigneten Positionen im Gasstrom G ermittelten Betriebsparametern - wie durch die Pfeile 30 repräsentiert - geeignete Stellgrößen für den elektrischen Heizer 24 vorgibt.

Nach erfolgtem Abbau der Wasserstoff- oder Kohlenmonoxidverunreinigungen im Gasstrom G im gasstromseitig gesehen ersten katalytischen Adsorbermodul 6 wird der Gasstrom G in den Oxidationskatalysator 8 weitergeleitet. Dort erfolgt im Ausführungsbeispiel ein Abbau von mitgeführtem Methan oder Tritium. Um diesen zu ermöglichen, wird über die Zuspeiseeinheit 13 eine geeignet gewählte Menge an Sauerstoff in den Gasstrom G zugemischt. Die Einspeiserate für den Sauerstoff wird dabei über die zentrale Steuereinheit 28 anhand eines von einem Sensor 32 ermittelten Kennwerts für den Anteil von im Gasstrom G mitgeführten Verunreinigungen eingestellt.

Um eine zuverlässige Reinigung des Gasstroms G von den genannten Verunreinigungen im Oxidationskatalysator 8 zu gewährleisten, ist die Einstellung eines für diesen besonders geeigneten Temperaturniveaus beim Eintritt des Gasstroms G in den Oxidationskatalysator 8 vorgesehen. Dazu ist dem Oxidationskatalysator 8 gasstromseitig ein Zwischenbeheizungssystem 34 vorgeschaltet. Dieses umfasst einen Rekuperativ-Wärmetauscher 36, der primärseitig in die Abströmleitung 12 und sekundärseitig in die Zuströmleitung 10 geschaltet ist. Über den Rekuperativ-Wärmetauscher 36 ist somit in ressourcenschonender Weise in der Art einer Wärmerückgewinnung ein Wärmeübertrag vom aus dem Oxidationskatalysator 8 abströmenden Gasstrom G auf den dem Oxidationskatalysator 8 zuströmenden Gasstrom G ermöglicht. Zur Endeinstellung einer für die Reaktion im Oxidationskatalysator 8 besonders günstigen Eintrittstemperatur des Gasstroms G von etwa 400°C bis 450°C ist der Rekuperativ-Wärmetauscher 36 ergänzt durch einen elektrischen Heizer 38, der hinsichtlich seiner Heizleistung ebenfalls über die zentrale Steuereinheit 28 angesteuert ist.

Um die im Oxidationskatalysator 8 ablaufende Oxidationsreaktion der genannten Verunreinigungen weiter zu begünstigen, ist eine besonders innige Vermischung des über die Zuspeiseeinheit 13 eingespeisten Sauerstoffs mit dem Gasstrom G vor dessen Eintritt in den Oxidationskatalysator 8 vorgesehen. Dazu ist dem Oxidationskatalysator 8 ein geeigneter Mischer 40, beispielsweise ein statischer Mischer, vorgeschaltet.

Nachdem im Oxidationskatalysator 8 die Oxidation der genannten Verunreinigungen durch Reaktion mit dem zugespeisten Sauerstoff erfolgt ist, führt der aus dem Oxidationskatalysator 8 abströmende Gasstrom G noch einen Rest an überschüssigem Sauerstoff mit. Zur Abscheidung dieses überschüssigen Sauerstoffs wird der Gasstrom G vor seiner Ableitung über das gasstromseitig gesehen zweite katalytische Adsorbermodul 6 geführt. Dabei wird der im Gasstrom mitgeführte überschüssige Sauerstoff in dem dort vorgehaltenen katalytischen Adsorbermaterial eingelagert. Insbesondere wird dabei der CuO-Anteil des im gasstromseitig gesehen zweiten katalytischen Adsorbermodul 6 vorgehaltenen katalytischen Adsorbermaterials durch Einlagerung von Sauerstoff erhöht, wobei sich der Cu-Anteil dieses Adsorbermaterials verringert. Durch die Einlagerung des überschüssigen Sauerstoffs wird somit der CuO-Anteil dieses katalytischen Adsorbermoduls 6 bereits beim bestimmungsgemäßen Betrieb des Gasaufbereitungssystems 1 regeneriert, so dass nach ausreichender Betriebszeit dieses katalytische Adsorbermodul 6 erneut für eine Verwendung als gasstromseitig gesehen erstes katalytisches Adsorbermodul 6 zur Verfügung steht.

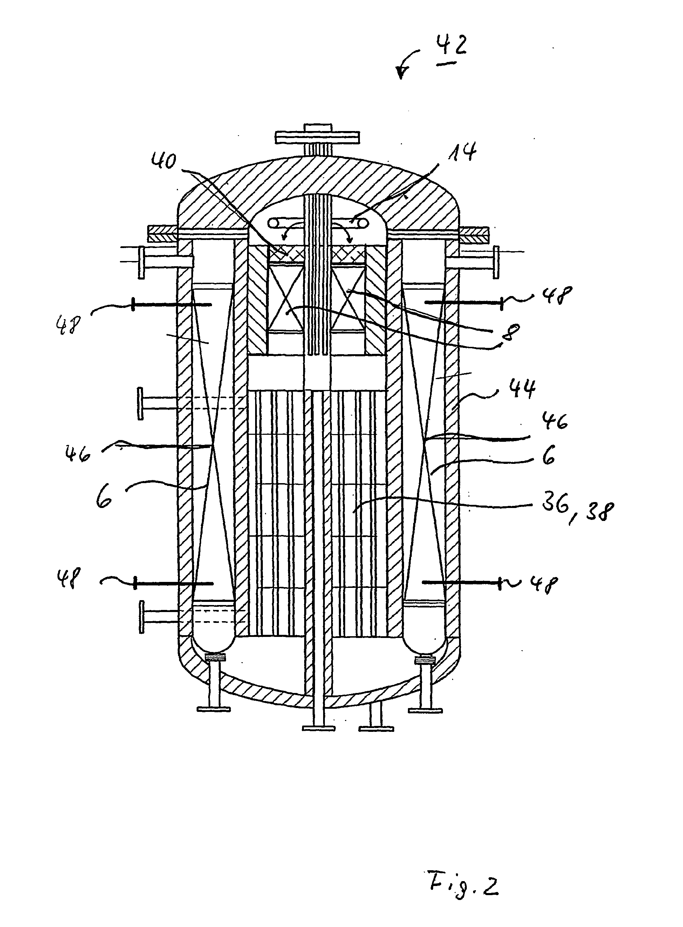

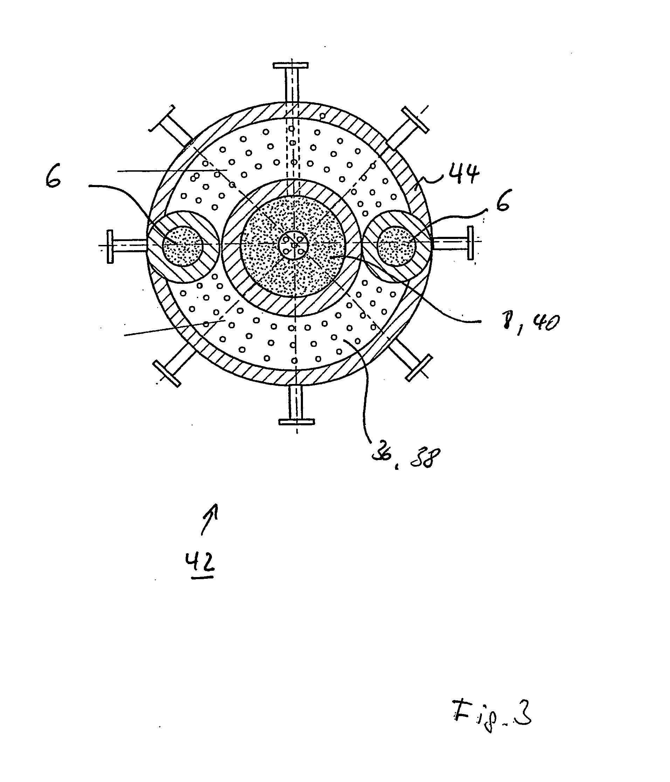

Für eine besonders kompakte und somit platz- und materialsparende Bauweise sind die wesentlichen Komponenten des Gasaufbereitungssystems 1 in eine konstruktive Einheit 42 integriert, wie sie im Längsschnitt in Figur 2 und im Querschnitt in Figur 3 gezeigt ist. Die konstruktive Einheit 42 weist dabei insbesondere ein für die genannten Komponenten gemeinsames druckfestes, im wesentlichen zylinderförmiges Außengehäuse 44 auf. Das Außengehäuse 44 ist dabei für eine Aufnahme der vollständigen Druckbelastung ausgelegt, so dass die in ihm angeordneten Komponenten vergleichsweise dünnwandig und ohne das Erfordernis gesonderter mechanischer Belastung ausgeführt sein können. Im Zentralbereich des Außengehäuses 44 ist der Oxidationskatalysator 8 angeordnet, oberhalb dessen unmittelbar der Mischer 40 positioniert ist. Wiederum oberhalb des Mischers 40 ist in der Art einer ringförmigen Einspritzeinheit die Zuspeiseeinheit 13 für den Sauerstoff angeordnet.

Unterhalb des Oxidationskatalysators 8 befindet sich im Ausführungsbeispiel der Rekuperativ-Wärmetauscher 36, ergänzt um den elektrischen Heizer 38. Der Rekuperativ-Wärmetauscher 36 ist dabei vorteilhafterweise als Rohrbündelwärmetauscher ausgeführt. Die Heizleistung des Heizers 38 ist regelbar. Die genaue Anordnung der diesen Komponenten jeweils zugeordneten Heizstäbe kann dabei selbstverständlich variieren und bedarfsgerecht gewählt werden. Die Anordnung des Rekuperativ-Wärmetauschers 36 und des Oxidationskatalysators 8 im Zentralbereich der konstruktiven Einheit 42 stellt dabei sicher, dass nur vergleichsweise geringe Wärmeverluste auftreten, so dass auch bei nur geringer Heizleistung ein besonders günstiger Umsetzungsgrad erreichbar ist.

Die beiden katalytischen Adsorberelemente 6 sind im Ausführungsbeispiel eher im Außenbereich aber innerhalb des Außengehäuses 44 angeordnet. Hinsichtlich der Dimensionierung der darin angeordnete Cu/CuO-Reaktionsbetten ist ein Verhältnis von Reaktionsbett-Höhe zu Reaktionsbett-Länge von etwa L/d ≅ 4..8 eingehalten. Zur Kompensation von Wärmedehnungen sind nicht näher dargestellte Kompensatoren vorgesehen. Zur geeigneten Verfahrensführung sind in den katalytischen Adsorberelementen 6 Temperatursensoren 46 sowie geeignet positionierte Probenahme-Elemente 48, die eine Analyse der im Gasstrom G mitgeführten Verunreinigungen ermöglichen sollen, angeordnet. Die zur Analyse vorgesehenen Sensoren sind dabei zur Analyse der Verunreinigungen geeignet ausgebildet. Insbesondere kann es sich dabei um Gaschromatographen, Massenspektrometer und/oder nach den Wärmelösungs-oder Wärmeleitverfahren arbeitende Sensoren handeln.

Durch die Ausführung des Gasaufbereitungssystems 1 als integrierte Einheit 42 ist eine strukturelle Entkopplung der wärmebelasteten Komponenten vom druckbelasteten Außengehäuse 44 erreicht. Durch diese Entkopplung kann einerseits das Außengehäuse unter Verwendung handelsüblicher Materialien mit geringem Materialverbrauch und unter Sicherstellung besonders hoher Zeitstandswerte ausgeführt sein, wobei andererseits die wärmebelasteten Komponenten vergleichsweise dünnwandig ausgeführt sein können.

Der Betrieb des Gasaufbereitungssystems 1 ist insbesondere darauf ausgerichtet, dass das abhängig von der jeweiligen Schaltstellung des Umschaltsystems 14 gasstromseitig gesehen zweite katalytische Adsorberelement 6 durch geeignete Beaufschlagung mit überschüssigem Sauerstoff für eine zukünftige Verwendung regeneriert wird. Dementsprechend wird die Einspeisung des Sauerstoffs in der Zuspeiseeinheit 13 derart eingestellt, dass auch nach dem Durchtritt des Gasstroms G durch den Oxidationskatalysator 8 noch ausreichend überschüssiger Sauerstoff zur Einlagerung in das jeweils nachgeschaltete katalytische Adsorbermodul 6 zur Verfügung steht.

Die Zuspeisung von Sauerstoff erfolgt dabei insbesondere derart, dass bezogen auf die festgestellte Methan-Verunreinigung im Gasstrom G Sauerstoffüberschuß im Oxidationskatalysator 8 herrscht, so dass noch überschüssiger Sauerstoff an das nachgeschaltete katalytische Adsorbermodul 6 weitergeleitet werden kann. Andererseits wird die Einspeiserate für den Sauerstoff aber derart eingestellt, dass bezogen auf die insgesamt festgestellten Verunreinigungen im Gasstrom G Sauerstoffunterschuß herrscht. Damit ist sichergestellt, dass die Menge des bei der Oxidation von Wasserstoff oder Kohlenmonoxid im gasstromseitig gesehen ersten katalytischen Adsorbermodul 6 aus dessen katalytischen Adsorbermaterial herausgelösten Sauerstoff größer ist als die Menge des nachfolgend im gasstromseitig gesehen zweiten katalytischen Adsorbermodul 6 wieder eingelagerten Sauerstoff. Damit läuft die Reduktionsreaktion im Cu-CuO-Gemisch des gasstromseitig gesehen ersten katalytischen Adsorbermoduls 6 schneller ab als die Oxidationsreaktion im Cu-CuO-Gemisch des gasstromseitig gesehen zweiten katalytischen Adsorbermoduls 6. Sollte demzufolge ein "Verbrauch" des Sauerstoffs im gasstromseitig gesehen ersten katalytischen Adsorbermoduls 6 - beispielsweise anhand eines Wasserstoff- oder Kohlenmonoxid-Durchbruchs - festgestellt werden, so wird für die Zuspeiserate für den Sauerstoff in der Zuspeiseeinheit 13 bezogen auf die insgesamt festgestellte Verunreinigung ein Sauerstoffüberschuß eingestellt, so dass ein zuverlässiger Abbau der noch verbliebenen Verunreinigungen im Oxidationskatalysator 8 gewährleistet ist. Sobald anschließend ein ausreichend hoher Einlagerungsanteil von Sauerstoff im gasstromseitig gesehen zweiten katalytischen Adsorbermodul 6 festgestellt wird, kann die genannte Umschaltung in der Reihenfolge der Verschaltung der katalytischen Adsorbermodule 6 mit dem Oxidationskatalysator 8 erfolgen.

### Bezugszeichenliste

- 1: Gasaufbereitungssystem
- 2: Gaszuführungssystem
- 4: Gasableitung
- 6: katalytisches Adsorbermodul
- 8: Oxydationskatalysator
- 10: Zuströmleitung
- 12: Abströmleitung
- 13: Zuspeiseeinheit
- 14: Umschaltsystem
- 16, 18: Umschalteinheit
- 20: Doppelpfeil
- 22: Rekuperativ-Wärmetauscher
- 24: elektrisch betriebener Heizer
- 26: Beheizungssystem
- 28: zentrale Steuereinheit
- 30: Pfeile
- 32: Sensor
- 34: Zwischenbeheizungssystem
- 36: Wärmetauscher
- 38: elektrischer Heizer
- 40: Mischer
- 42: konstruktive Einheit
- 44: Außengehäuse
- 46: Temperatursensoren
- 48: Probenahme-Elemente

- G: Gasstrom

## Patentansprüche

1. Verfahren zur Behandlung eines Gasstroms (G), bei dem der Gasstrom (G) in einer ersten Reinigungsstufe zur Oxidation mitgeführter Verunreinigungen über ein erstes katalytisches Adsorbermodul (6) geführt und dem Gas-strom (G) molekularer oder atomarer Sauerstoff zugemischt wird, wobei der mit dem zugemischten Sauerstoff versetzte Gasstrom (G) in einer zweiten Reinigungsstufe über einen Oxidationskatalysator (8) geführt wird, und wobei der aus dem Oxidationskatalysator (8) abströmende Gasstrom (G) in einer dritten Reinigungsstufe zur Reduktion von überschüssigem Sauerstoff über ein zweites katalytisches Adsorbermodul (6) geführt wird.

2. Verfahren nach Anspruch 1, bei dem im ersten und im zweiten katalytischen Adsorbermodul (6) jeweils ein Cu/CuO-Gemisch als katalytisches Adsorbermaterial verwendet wird.

3. Verfahren nach Anspruch 1 oder 2, bei dem vor dem Eintritt des Gasstroms (G) in das erste katalytische Adsorbermodul (6) ein Kennwert für den Anteil mitgeführter Verunreinigungen im Gasstrom (G) ermittelt wird, anhand dessen die Zumischrate für den Sauerstoff in den Gasstrom (G) eingestellt wird.

4. Verfahren nach einem der Ansprüche 1 bis 3, bei dem für den Gasstrom (G) bei seinem Eintritt in den Oxidationskatalysator (8) eine Temperatur von etwa 400°C bis 450°C eingestellt wird.

5. Verfahren nach einem der Ansprüche 1 bis 4, bei dem der Gasstrom (G) vor seinem Eintritt in den Oxidationskatalysator (8) durch rekuperativen Wärmetausch mit dem vom Oxidationskatalysator (8) abströmenden Gasstrom (G) vorgewärmt wird.

6. Verfahren nach einem der Ansprüche 1 bis 5, bei dem für den Gasstrom (G) bei seinem Eintritt in das erste katalytische Adsorbermodul (6) eine Temperatur von etwa 250°C eingestellt wird.

7. Verfahren nach einem der Ansprüche 1 bis 6, bei dem der Gasstrom (G) vor seinem Eintritt in das erste katalytische Adsorbermodul (6) durch rekuperativen Wärmetausch mit dem vom zweiten katalytischen Adsorbermodul (6) abströmenden Gasstrom (G) vorgewärmt wird.

8. Verfahren zum Betreiben einer Kernkraftwerksanlage, bei dem ein Teilstrom eines Helium-Kühlgasstroms nach einem der Ansprüche 1 bis 7 behandelt wird.

9. Verfahren nach Anspruch 8, bei dem im aus dem zweiten katalytischen Adsorbermodul (6) abströmenden Gasstrom (G) ein Kennwert für den Anteil von möglicherweise mitgeführtem Sauerstoff ermittelt wird, wobei nach dem Überschreiten eines vorgegebenen Grenzwerts für diesen Kennwert die Positionen des ersten und des zweiten katalytischen Adsorberelements (6) im Strömungspfad des Gasstroms (G) ausgetauscht werden.

10. Gasaufbereitungssystem (1) mit mindestens zwei im Hinblick auf einen Gasstrom (G) in Reihe geschalteten katalytischen Adsorbermodulen (6), zwischen die gasstromseitig ein Oxidationskatalysator (8) geschaltet ist.

11. Gasaufbereitungssystem (1) nach Anspruch 10, dessen Oxidationskatalysator (8) gasstromseitig eine Zuspeiseeinheit (13) für molekularen oder atomaren Sauerstoff vorgeschaltet ist.

12. Gasaufbereitungssystem (1) nach Anspruch 11, bei dem ein der Zuspeiseeinheit (13) zugeordneter Stellwertgeber eingangsseitig mit einem dem gasstromseitig gesehen ersten katalytischen Adsorbermodul (6) vorgeschalteten Sensor (32) für den Anteil mitgeführter Verunreinigungen im Gasstrom (G) verbunden ist.

13. Gasaufbereitungsstem (1) nach einem der Ansprüche 10 bis 12, dessen katalytische Adsorbermodule (6) jeweils ein Cu/CuO-Gemisch als katalytisches Adsorbermaterial aufweisen.

14. Gasaufbereitungssystem (1) nach einem der Ansprüche 10 bis 13, dessen Oxidationskatalysator (8) gasstromseitig ein Zwischenbeheizungssystem (34) vorgeschaltet ist.

15. Gasaufbereitungssystem nach Anspruch 14, dessen Zwischenbeheizungssystem (34) einen Rekuperativ-Wärmetauscher (36) umfaßt, der primärseitig in eine dem Oxidationskatalysator (8) zugeordnete Abströmleitung (12) für den Gasstrom (G) und sekundärseitig in eine dem Oxidationskatalysator (8) zugeordnete Zuströmleitung (10) für den Gasstrom (G) geschaltet ist.

16. Gasaufbereitungssystem (1) nach einem der Ansprüche 11 bis 15, dessen in Gasstromrichtung gesehen erstem katalytischen Adsorbermodul (6) ein Beheizungssystem (26) vorgeschaltet ist.

17. Gasaufbereitungssystem (1) nach Anspruch 16, dessen Beheizungssystem (26) einen Rekuperativ-Wärmetauscher (22) umfaßt, der primärseitig in eine dem zweiten katalytischen Adsorbermodul (6) zugeordnete Gasableitung (4) und sekundärseitig in ein dem ersten katalytischen Adsorbermodul (6) zugeordnete Gaszuführungssystem (2) geschaltet ist.

18. Gasaufbereitungssystem (1) nach einem der Ansprüche 10 bis 17, bei dem den katalytischen Adsorbermodulen (6) ein gemeinsames Umschaltsystem (14) für die Strömungsführung des Gasstroms (G) zugeordnet ist.

19. Gasaufbereitungssystem (1) nach einem der Ansprüche 10 bis 18, bei dem die katalytischen Adsorbermodule (6) und der Oxidationskatalysator (8) in einem gemeinsamen Außengehäuse (44) Druckbehälter angeordnet sind.

20. Gasaufbereitungssystem (1) nach einem der Ansprüche 10 bis 19, das an den Helium-Kühlgaskreislauf einer kerntechnischen Anlage angeschlossen ist.

## Claims

1. A method for treating a gas flow (G), wherein the gas flow (G) is guided in a first purification stage via a first catalytic adsorber module (6) in order to oxidize contaminants carried along therewith and molecular or atomic oxygen is added to the gas flow (G), wherein the gas flow (G) mixed with the added oxygen is guided in a second purification stage via an oxidation catalyst (8) and wherein the gas flow (G) flowing away from the oxidation catalyst (8) is guided in a third purification stage via a second catalytic adsorber module (6) in order to reduce excessive oxygen.

2. The method of claim 1, wherein a mixture of Cu and CuO is used as a catalytic adsorbent in each of the first and second catalytic adsorber modules (6).

3. The method of claim 1 or 2, wherein, prior to the entry of the gas flow (G) into the first catalytic adsorber module (6), a characteristic value is determined for the proportion of contaminants carried along in the gas flow (G), on the basis of which the rate of adding oxygen to the gas flow (G) is set.

4. The method of any of claims 1 to 3, wherein a temperature of approx. 400°C to 450°C is set for the gas flow (G) upon its entry into the oxidation catalyst (8).

5. The method of any of claims 1 to 4, wherein the gas flow (G) is preheated, prior to its entry into the oxidation catalyst (8), through recuperative heat exchange with the gas flow (G) flowing away from the oxidation catalyst (8).

6. The method of any of claims 1 to 5, wherein a temperature of approx. 250°C is set for the gas flow (G) upon its entry into the first catalytic adsorber module (6).

7. The method of any of claims 1 to 6, wherein the gas flow (G) is preheated, prior to its entry into the first catalytic adsorber module (6), through recuperative heat exchange with the gas flow (G) flowing away from the second catalytic adsorber module (6).

8. A method for operating a nuclear power plant, wherein a partial flow of a helium cooling gas flow is treated according to any of claims 1 to 7.

9. The method of claim 8, wherein, in the gas flow (G) flowing away from the second catalytic adsorber module (6), a characteristic value is determined for the proportion of oxygen possibly carried along, the positions of the first and second catalytic adsorber modules (6) being interchanged in the flow path of the gas flow (G) after a predefined limit value of this characteristic value has been exceeded.

10. A gas processing system (1) having at least two catalytic adsorber modules (6), which are connected in series in view of a gas flow (G) and between which an oxidation catalyst (8) is connected on the gas-flow side.

11. The gas processing system (1) of claim 10, upstream of the oxidation catalyst (8) of which a feeding unit (13) for molecular or atomic oxygen is connected on the gasflow side.

12. The gas processing system (1) of claim 11, wherein a set-point generator associated with the feeding unit (13) is connected on the input side to a sensor (32) for the proportion of contaminants carried along with the gas flow (G), which sensor (32) is connected upstream of the first catalytic adsorber module (6) as viewed from the gas-flow side.

13. The gas processing system (1) of any of claims 10 to 12, whose catalytic adsorber modules (6) each contain a mixture of Cu and CuO as a catalytic adsorbent.

14. The gas processing system (1) of any of claims 10 to 13, wherein an intermediate heating system (34) is connected upstream of its oxidation catalyst (8) on the gas-flow side.

15. The gas processing system of claim 14, whose intermediate heating system (34) comprises a recuperative heat exchanger (36), which is connected, on the primary side, into an outflow line (12), associated with the oxidation catalyst (8), for the gas flow (G), and which is connected, on the secondary side, into an inflow line (10), associated with the oxidation catalyst (8), for the gas flow (G).

16. The gas processing system (1) of any of claims 11 to 15, wherein a heating system (26) is connected upstream of its first catalytic adsorber module (6), as viewed in the direction of the gas-flow.

17. The gas processing system (1) of claim 16, whose heating system (26) comprises a recuperative heat exchanger (22), which is connected, on the primary side, into a gas discharge line (4) associated with the second catalytic adsorber module (6), and which is connected, on the secondary side, into a gas feeding system (2) associated with the first catalytic adsorber module (6).

18. The gas processing system (1) of any of claims 10 to 17, wherein a common reversal system (14) for guiding the gas flow (G) is associated with the catalytic adsorber modules (6).

19. The gas processing system (1) of any of claims 10 to 18, wherein the catalytic adsorber modules (6) and the oxidation catalyst (8) are arranged in a common outer housing (44) (pressure vessel).

20. The gas processing system (1) of any of claims 10 to 19, which is connected to the helium cooling-gas circuit of a nuclear facility.

## Revendications

1. Procédé de traitement d'un flux gazeux (G), dans lequel le flux gazeux (G) est guidé dans une première étape de purification, pour l'oxydation d'impuretés entraînées, par l'intermédiaire d'un premier module adsorbant (6) catalytique et de l'oxygène moléculaire ou atomique est ajouté et mélangé au flux gazeux (G), dans lequel le flux gazeux (G) mélangé à l'oxygène ajouté est guidé, dans une deuxième étape de purification, par l'intermédiaire d'un catalyseur d'oxydation (8) et dans lequel le flux gazeux (G) qui s'écoule du catalyseur d'oxydation (8) est guidé, dans une troisième étape de purification, pour réduire l'oxygène excédentaire, par l'intermédiaire d'un deuxième module adsorbant (6) catalytique.

2. Procédé selon la revendication 1, dans lequel un mélange de Cu et de CuO est utilisé comme adsorbant catalytique dans chacun des premier et deuxième modules adsorbants (6) catalytiques.

3. Procédé selon la revendication 1 ou 2, dans lequel, avant l'entrée du flux gazeux (G) dans le premier module adsorbant (6) catalytique, une valeur caractéristique est déterminée pour la part d'impuretés entraînées dans le flux gazeux (G), à la base de laquelle se règle le taux d'ajout d'oxygène au flux gazeux (G).

4. Procédé selon l'une quelconque des revendications 1 à 3, dans lequel une température d'environ 400°C à 450°C est réglé pour le flux gazeux (G) lors de son entrée dans le catalyseur d'oxydation (8).

5. Procédé selon l'une quelconque des revendications 1 à 4, dans lequel le flux gazeux (G) est préchauffé, avant son entrée dans le catalyseur d'oxydation (8), à l'aide d'échange de chaleur récupératif avec le flux gazeux (G) qui s'écoule du catalyseur d'oxydation (8).

6. Procédé selon l'une quelconque des revendications 1 à 5, dans lequel une température d'environ 250°C est réglé pour le flux gazeux (G) lors de son entrée dans le premier module adsorbant (6) catalytique.

7. Procédé selon l'une quelconque des revendications 1 à 6, dans lequel le flux gazeux (G) est préchauffé, avant son entrée dans le premier module adsorbant (6) catalytique, à l'aide d'échange de chaleur récupératif avec le flux gazeux (G) qui s'écoule du deuxième module adsorbant (6) catalytique.

8. Procédé pour faire fonctionner une installation nucleaire, dans lequel un flux partiel d'un flux gazeux de refroidissement d'hélium est traité selon l'une quelconque des revendications 1 à 7.

9. Procédé selon la revendication 8, dans lequel une valeur caractéristique est déterminée dans le flux gazeux (G) qui s'écoule du deuxième module adsorbant (6) catalytique, pour la part d'oxygène éventuellement entraînée, les positions du premier et deuxième modules adsorbants (6) catalytiques étant interchangées dans le chemin de flux du flux gazeux (G) après qu'une valeur limite prédéfinie de cette valeur caractéristique a été excédée.

10. Système de traitement de gaz (1) ayant au moins deux modules adsorbants (6) catalytiques, qui sont montés en série en vue d'un flux gazeux (G) et entre lesquels un catalyseur d'oxydation (8) est monté du côté du flux gazeux.

11. Système de traitement de gaz (1) selon la revendication 10, en amont du catalyseur d'oxydation (8) duquel est monté une unité d'alimentation (13) pour de l'oxygène moléculaire ou atomique du côté du flux gazeux.

12. Système de traitement de gaz (1) selon la revendication 11, dans lequel un générateur de valeur de réglage affecté à l'unité d'alimentation (13) est relié du côté d'entrée, à un capteur (32) pour la part d'impuretés entraînées avec le flux gazeux (G), ce capteur (32) étant monté en amont du premier module adsorbant (6) catalytique vu du côté du flux gazeux.

13. Système de traitement de gaz (1) selon l'une quelconque des revendications 10 à 12, dont chacun des modules adsorbants (6) catalytiques contient un mélange de Cu et de CuO comme adsorbant catalytique.

14. Système de traitement de gaz (1) selon l'une quelconque des revendications 10 à 13, dans lequel un système de chauffage intermédiaire (34) est monté an amont de son catalyseur d'oxydation (8) du côté du flux gazeux.

15. Système de traitement de gaz selon la revendication 14, dont le système de chauffage intermédiaire (34) comprend un échangeur de chaleur récuperatif (36), qui est monté, du côté primaire, dans une ligne d'écoulement (12), affectée au catalyseur d'oxydation (8), pour le flux gazeux (G), et qui est monté, du côté secondaire, dans une ligne d'affluence (10), affectée au catalyseur d'oxydation (8), pour le flux gazeux (G).

16. Système de traitement de gaz (1) selon l'une quelconque des revendications 11 à 15, dans lequel un système de chauffage (26) est monté en amont de son premier module adsorbant (6) catalytique, vu dans la direction du flux gazeux.

17. Système de traitement de gaz (1) selon la revendication 16, dont le système de chauffage (26) comprend un échangeur de chaleur récuperatif (22), qui est monté, du côté primaire, dans une ligne de décharge de gaz (4) affectée au deuxième module adsorbant (6) catalytique, et qui est monté, du côté secondaire, dans un système d'alimentation de gaz (2) affectée au premier module adsorbant (6) catalytique.

18. Système de traitement de gaz (1) selon l'une quelconque des revendications 10 à 17, dans lequel un système de renversement (14) commun pour guider le flux gazeux (G) est affecté aux modules absorbants (6) catalytiques.

19. Système de traitement de gaz (1) selon l'une quelconque des revendications 10 à 18, dans lequel les modules absorbants (6) catalytiques et le catalyseur d'oxydation (8) sont disposés dans un boîtier extérieur (44) commun (cuve sous pression).

20. Système de traitement de gaz (1) selon l'une quelconque des revendications 10 à 19, qui est relié au flux gazeux de refroidissement d'hélium d'une installation nucléaire.
